# EUROPEAN PATENT APPLICATION

(11) **EP 2 424 099 A1**
(43) Date of publication of application: **29.02.2012**
(21) Application number: 10766939.2
(22) Date of filing: 30.03.2010
(51) Int. Cl.: H02M 7/12, H02M 3/155, H02M 7/48

(54) **POWER SUPPLY DEVICE**

(30) Priority: 21.04.2009 JP 2009103242
(71) Applicant: Sharp Kabushiki Kaisha, Osaka-shi, Osaka 545-8522 (JP)
(72) Inventor: YOSHIDA, Michiho, Osaka 545-8522 (JP)
(74) Representative: Treeby, Philip David William
(86) International application number: PCT/JP2010/055722
(87) International publication number: WO 2010/122880

(57) **Abstract**

A microcomputer (18) in this power supply device includes a target duty ratio calculation unit (31) for calculating a target duty ratio (DUt) based on an input voltage (Vin), an input current (Iin), an output voltage (Vo), and a target voltage (Vt), and a duty ratio calculation unit (33) for calculating a duty ratio (DU) of a current period to gradually decrease a deviation of a duty ratio (DUp) of a previous period from the target duty ratio (DUt), and when the output voltage (Vo) exceeds a threshold voltage (Vth1), instantly reducing the duty ratio (DU) of the current period. As a result, soft start can be safely provided.

## Description

### TECHNICAL FIELD

The present invention relates to power supply devices, and more particularly to a power supply device including an active filter.

### BACKGROUND ART

Conventionally, power supply devices for air conditioners, refrigerators and the like rectify an alternating current (ac) voltage from a commercial power supply by a rectifier circuit such as a diode bridge, smooth the rectified voltage by a smoothing circuit such as a capacitor to generate a direct current (dc) voltage, convert the dc voltage to an ac voltage by an inverter, and supply the ac voltage to an ac motor.

Such a power supply device's power factor is improved and its power supply harmonic current is reduced, by a method introducing an active filter between a rectifier circuit and a smoothing circuit to match an input current to an input voltage in waveform and phase (see Japanese Patent Laying-Open No. 2008-79474 (Patent Literature 1), for example). In Literature 1, detection of an input current, an input voltage and an output voltage and generation of a signal controlling a switching element is all done by hardware (electronic circuitry).

There is also a method employing software to generate a signal controlling a switching element (see Japanese Patent Laying-open No. 2004-260871 (Patent Literature 2), for example). In Literature 2, a target duty ratio is stored in an internal memory, only an output voltage from an active filter is detected, a signal controlling a switching element is generated to match the detected voltage to a target voltage, and an input current and an input voltage are not detected.

### CITATION LIST

### PATENT LITERATURE

PTL 1: Japanese Patent Laying-open No. 2008-79474
PTL 2: Japanese Patent Laying-open No. 2004-260871

### SUMMARY OF INVENTION

### TECHNICAL PROBLEM

Patent Literature 1 employs hardware to generate the signal controlling the switching element, and can thus provide flexible control accommodating variations in input current, input voltage and output voltage. However, it requires a large number of electric elements, and to mount them, a substrate having a large space is required, which invites an increased cost. Furthermore, a soft start circuit (e.g., an RC series circuit) is additionally required to prevent a duty ratio from steeply increasing upon startup. This invites a further increased cost.

Patent Literature 2 can provide soft start by changing a duty ratio to the target duty ratio at a predetermined rate. However, if a current or a voltage that may destroy the switching element and the like is detected within a period of time during which the duty ratio reaches the target duty ratio, the duty ratio is not immediately reduced, resulting in continuation of a dangerous state for a while.

Therefore, a main object of the present invention is to provide a power supply device that can be soft started and is safe.

### SOLUTION TO PROBLEM

A power supply device according to the present invention includes a rectifier circuit for rectifying a first ac voltage, an active filter provided in a next stage of the rectifier circuit, a smoothing circuit for smoothing an output voltage from the active filter to generate a dc voltage, and an inverter for converting the dc voltage to a second ac voltage. The active filter includes a reactor having one terminal receiving an output voltage from the rectifier circuit, a diode having an anode connected to the other terminal of the reactor and a cathode connected to the smoothing circuit, and a switching element connected between the other terminal of the reactor and a reference voltage line. The power supply device further includes a microcomputer for detecting an input current, an input voltage, and an output voltage to and from the active filter, and based on a detection result, controlling the switching element to turn it on/off to match the input current to the input voltage in phase, and also match the output voltage from the active filter to a target voltage. The microcomputer includes a target duty ratio calculation unit for calculating a target duty ratio based on the input voltage, the input current, the output voltage, and the target voltage, a duty ratio calculation unit for calculating a duty ratio of a current period to gradually decrease a deviation of a duty ratio of a previous period from the target duty ratio calculated by the target duty ratio calculation unit, and when the output voltage exceeds a predetermined first threshold voltage, instantly reducing the duty ratio of the current period to be lower than the duty ratio of the previous period, and a signal generation unit for generating a signal controlling the switching element based on the duty ratio of the current period calculated by the duty ratio calculation unit. Accordingly, the duty ratio of the current period is set to gradually decrease the deviation of the duty ratio of the previous period from the target duty ratio, thereby providing soft start. Further, a rate of change in duty ratio upon soft start can be flexibly set. Furthermore, when the output voltage exceeds the first threshold voltage, the duty ratio of the current period is instantly reduced to be lower than the duty ratio of the previous period, thereby ensuring safety.

Preferably, when the output voltage exceeds the first threshold voltage, the duty ratio calculation unit instantly reduces the duty ratio of the current period to a predetermined duty ratio.

Preferably, when the output voltage exceeds the first threshold voltage, the duty ratio calculation unit instantly reduces the duty ratio of the current period to the target duty ratio.

Another power supply device according to the present invention includes a rectifier circuit for rectifying a first ac voltage, an active filter provided in a next stage of the rectifier circuit, a smoothing circuit for smoothing an output voltage from the active filter to generate a dc voltage, and an inverter for converting the dc voltage to a second ac voltage. The active filter includes a reactor having one terminal receiving an output voltage from the rectifier circuit, a diode having an anode connected to the other terminal of the reactor and a cathode connected to the smoothing circuit, and a switching element connected between the other terminal of the reactor and a reference voltage line. The power supply device further includes a microcomputer for detecting an input current, an input voltage, and an output voltage to and from the active filter, and based on a detection result, controlling the switching element to turn it on/off to match the input current to the input voltage in phase, and also match the output voltage from the active filter to a target voltage. The microcomputer includes a target duty ratio calculation unit for calculating a target duty ratio based on the input voltage, the input current, the output voltage, and the target voltage, a duty ratio calculation unit for, when the target duty ratio calculated by the target duty ratio calculation unit is higher than a duty ratio of a previous period, increasing a duty ratio of a current period at a first rate to gradually decrease a deviation of the duty ratio of the previous period from the target duty ratio, and when the target duty ratio calculated by the target duty ratio calculation unit is lower than the duty ratio of the previous period, reducing the duty ratio of the current period at a second rate to gradually decrease a deviation of the duty ratio of the previous period from the target duty ratio, and when the output voltage exceeds a predetermined first threshold voltage, instantly increasing the second rate, and a signal generation unit for generating a signal controlling the switching element based on the duty ratio of the current period calculated by the duty ratio calculation unit. Accordingly, the duty ratio of the current period is increased at the first rate or reduced at the second rate to gradually decrease the deviation of the duty ratio of the previous period from the target duty ratio, thereby providing soft start. Further, a rate of change in duty ratio upon soft start can be flexibly set. Furthermore, when the output voltage exceeds the first threshold voltage, the second rate is instantly increased, thereby ensuring safety.

Preferably, the microcomputer controls the inverter, and when the output voltage exceeds a predetermined second threshold voltage larger than the first threshold voltage, the microcomputer stops the inverter.

### ADVANTAGEOUS EFFECTS OF INVENTION

As described above, the present invention can implement a power supply device that can be soft started and is safe. Further, a rate of change in duty ratio upon soft start can be flexibly set.

### BRIEF DESCRIPTION OF DRAWINGS

Fig. 1 is a circuit block diagram showing a configuration of a power supply device according to a first embodiment of the present invention.
Fig. 2 is a block diagram showing a configuration of a signal generation unit shown in Fig. 1.
Fig. 3 is a diagram for illustrating operation of a duty ratio calculation unit shown in Fig. 2.
Fig. 4 is a diagram for illustrating operation of a storage unit shown in Fig. 2.
Fig. 5 illustrates a method of generating a zero cross detection signal in a microcomputer shown in Fig. 1.
Fig. 6 is a circuit block diagram showing a modification of the first embodiment.
Fig. 7 is a block diagram showing a substantial part of a power supply device according to a second embodiment of the present invention.
Fig. 8 is a block diagram showing a substantial part of a power supply device according to a third embodiment of the present invention.
Fig. 9 is a block diagram showing a substantial part of a power supply device according to a fourth embodiment of the present invention.
Fig. 10 is a block diagram showing a substantial part of a power supply device according to a fifth embodiment of the present invention.
Fig. 11 is a flowchart showing operation of a microcomputer explained with reference to Fig. 10.

### DESCRIPTION OF EMBODIMENTS

### [First Embodiment]

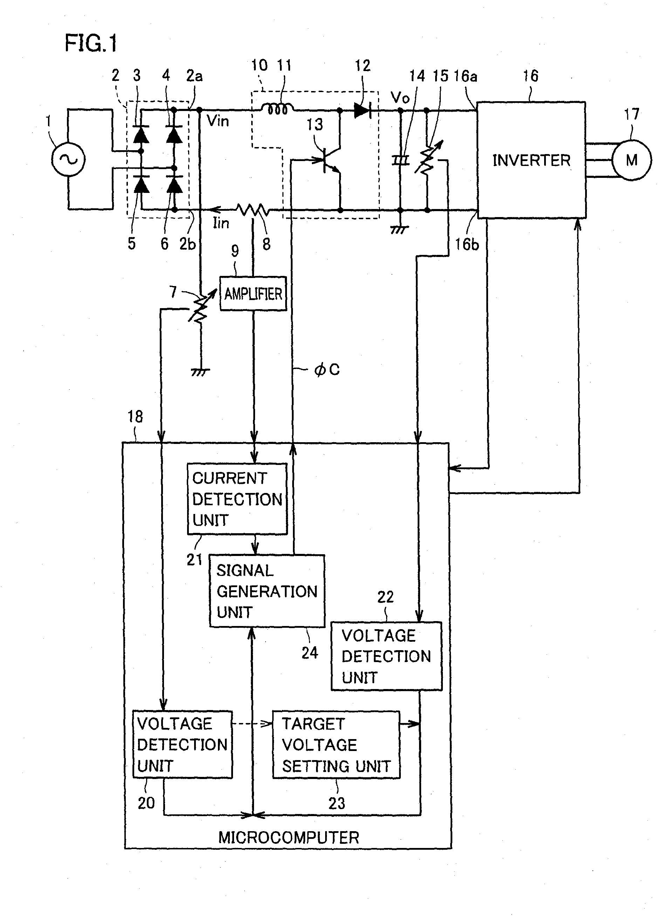

Fig. 1 is a block diagram showing a configuration of a power supply device according to a first embodiment of the present invention. In Fig. 1, the power supply device includes a rectifier circuit 2, voltage division resistors 7 and 15, a current detection resistor 8, an amplifier 9, an active filter 10, a smoothing capacitor 14, an inverter 16, and a microcomputer 18.

Rectifier circuit 2 includes four diodes 3 to 6 connected in the form of a bridge, and provides full-wave rectification of an ac voltage from an ac power supply 1. The ac voltage is provided between the anodes of diodes 3 and 4. Diodes 3 and 4 have their respective cathodes both connected to a positive voltage output node 2a. Diodes 5 and 6 have their respective cathodes connected to the anodes of diodes 3 and 4, respectively, and have their respective anodes both connected to a negative voltage output node 2b.

Voltage division resistor 7 is connected between positive voltage output node 2a of rectifier circuit 2 and a reference voltage line. Voltage division resistor 7 divides an output voltage from rectifier circuit 2, i.e., an input voltage Vin to active filter 10, to generate a signal representing input voltage Vin and provide the signal to microcomputer 18.

Current detection resistor 8 is connected between a negative voltage input node 16b of inverter 16 and negative voltage output node 2b of rectifier circuit 2, and outputs a signal representing an input current Iin to active filter 10. Amplifier 9 amplifies the output signal from current detection resistor 8, and provides the amplified signal to microcomputer 18. Inverter 16 has negative voltage input node 16b connected to the reference voltage line.

Active filter 10 includes a reactor 11, a diode 12, and an IGBT (Insulated Gate Bipolar Transistor) 13. Reactor 11 has one terminal connected to positive voltage output node 2a of rectifier circuit 2. Diode 12 has an anode connected to the other terminal of reactor 11, and a cathode connected to a positive voltage input node 16a of inverter 16. IGBT 13 has a collector connected to the other terminal of reactor 11, an emitter connected to the reference voltage line, and a gate receiving a control signal φC from microcomputer 18.

Smoothing capacitor 14 is connected between the cathode of diode 12 and the reference voltage line. Smoothing capacitor 14 smoothes an output voltage Vo from active filter 10 to generate a dc voltage. Voltage division resistor 15 is connected to smoothing capacitor 14 in parallel. Voltage division resistor 15 divides output voltage Vo from active filter 10, to generate a signal representing output voltage Vo and provide the signal to microcomputer 18. Inverter 16 converts output voltage Vo from active filter 10 to a three-phase ac voltage, and provides the three-phase ac voltage to an ac motor 17.

Microcomputer 18 controls inverter 16 in response to a dc current signal from inverter 16 and a motor position signal from motor 17. Further, in response to input voltage Vin, input current Iin, and output voltage Vo, microcomputer 18 controls IGBT 13 to turn it on/off to match input voltage Vin to input current Iin in waveform and phase to bring a power factor close to one, and also match output voltage Vo to a target voltage Vt. Further, microcomputer 18 decreases target voltage Vt as input voltage Vin decreases. Furthermore, microcomputer 18 reduces a duty ratio DU of control signal φC as input current Iin exceeds a threshold current Ith1, and stops controlling inverter 16 as input current Iin exceeds a threshold current Ith2 larger than threshold current Ith1.

More specifically, microcomputer 18 includes voltage detection units 20 and 22, a current detection unit 21, a target voltage setting unit 23, and a signal generation unit 24. Voltage detection unit 20 generates a digital signal representing the waveform, phase, amplitude and the like of input voltage Vin to active filter 10 in response to an output signal from voltage division resistor 7. Current detection unit 21 generates a digital signal representing the waveform, phase, amplitude and the like of input current Iin to active filter 10 in response to an output signal from amplifier 9. Voltage detection unit 22 generates a digital signal representing the level of output voltage Vo from active filter 10 in response to an output signal from voltage division resistor 15.

Target voltage setting unit 23 generates target voltage Vt in response to an output signal from voltage detection unit 20. Target voltage Vt decreases as input voltage Vin to active filter 10 decreases. In response to input voltage Vin, input current Iin, output voltage Vo, and target voltage Vt, signal generation unit 24 generates control signal φC to control IGBT 13 to turn it on/off to match input voltage Vin to input current Iin in waveform and phase to bring a power factor close to one, and also to match output voltage Vo to target voltage Vt.

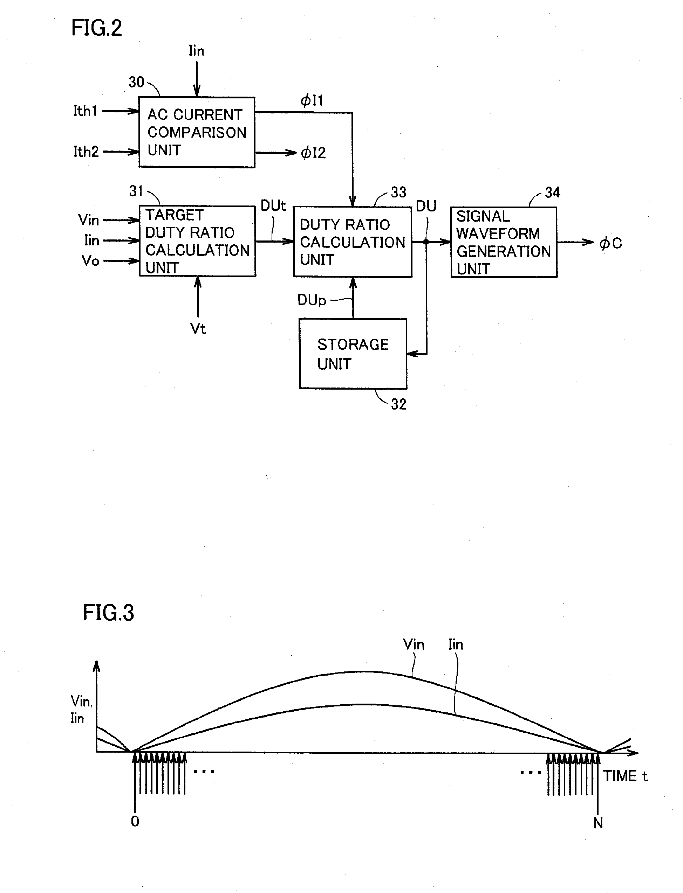

As shown in Fig. 2, signal generation unit 24 includes an ac current comparison unit 30, a target duty ratio calculation unit 31, a storage unit 32, a duty ratio calculation unit 33, and a signal waveform generation unit 34. Ac current comparison unit 30 determines input current Iin in response to an output signal from current detection unit 21 in Fig. 1, and compares input current Iin to preset threshold currents Ith1 and Ith2 (wherein Ith1 < Ith2). If Iin < Ith1 is satisfied, ac current comparison unit 30 pulls both signals φI1 and φI2 low. If Ith1 < Iin < Ith2 is satisfied, ac current comparison unit 30 pulls signals φ**I**1 and φI2 high and low, respectively. If Tin > Ith2 is satisfied, ac current comparison unit 30 pulls both signals φI1 and φI2 high.

If signal φI2 is low, microcomputer 18 controls inverter 16, and if signal φI2 is pulled high, microcomputer 18 turns off all transistors in inverter 16 and stops controlling inverter 16.

As shown in Fig. 3, input voltage Vin and input current Iin have their one period divided into (N + 1) segments (N is a positive integer), and a duty ratio DU is set for each segment. Target duty ratio calculation unit 31 calculates a target duty ratio DUt for each segment based on input voltage Vin, input current Iin, output voltage Vo, and target voltage Vt.

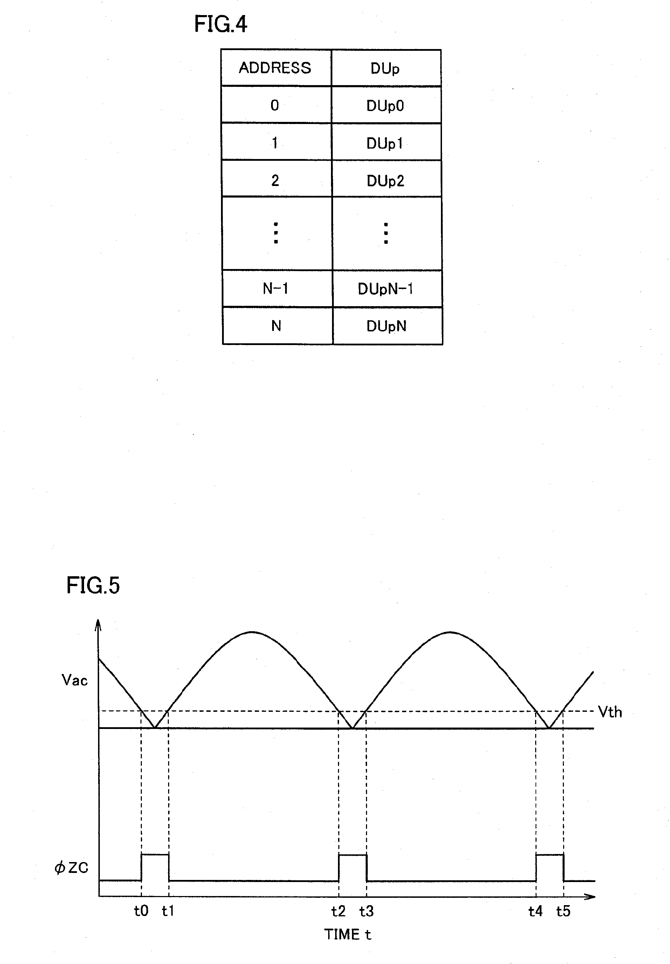

As shown in Fig. 4, storage unit 32 has addresses 0 to N at which are stored duty ratios DUp0 to DUpN for all of the segments, respectively, of a previous period. If signal φI1 is low, duty ratio calculation unit 33 calculates duty ratio DU for a current segment of a current period to gradually eliminate in a predetermined number of periods a deviation of a duty ratio DUp stored in storage unit 36 that corresponds to a segment of the previous period that corresponds to the current segment from target duty ratio DUt for the current segment.

Note that duty ratio DU may be approximated to target duty ratio DUt by employing PID control which is a feedback control technique, or by a predetermined rate of the deviation at a time, or by another method.

If signal φI1 is high, duty ratio calculation unit 33 instantly reduces duty ratio DU for the current segment of the current period to a predetermined sufficiently low duty ratio. That is, if signal φI1 is low, duty ratio calculation unit 33 calculates duty ratio DU such that duty ratio DU gradually reaches target duty ratio DUt, and thus if large input current Iin is detected for some reason, a dangerous state may continue.

If an overcurrent flows through IGBT 13, IGBT 13 may be destroyed due to a short circuit. The destruction of IGBT 13 due to a short circuit causes a short circuit between a power supply line and the reference voltage line, which may result in a large current flow and destruction of the circuit. For this reason, a common circuit is protected by a fuse and the like. In a circuit for a product such as an air conditioner, however, blowing of a fuse of a power supply line that results in an inoperable state must be avoided as much as possible. Therefore, if signal φI1 is high, duty ratio calculation unit 33 instantly reduces duty ratio DU to the sufficiently low duty ratio while controlling inverter 16.

Signal waveform generation unit 34 generates a waveform of control signal φC based on duty ratio DU produced by duty ratio calculation unit 33. Control signal φC is a function of input voltage Vin, input current Iin, and output voltage Vo, and φC = x (Vin, Iin, Vo) is satisfied. Output voltage Vo is a function of target voltage Vt, output voltage Vo, and input voltage Vin, and Vo = y (Vt, Vo, Vin) is satisfied. Input voltage Vin and output voltage Vo are controlled to have a fixed relationship. Further, as input voltage Vin decreases, target voltage Vt decreases, so that if input voltage Vin decreases, electric power loss does not vary.

Control signal φC turns IGBT 13 on/off periodically as determined by any set value stored in microcomputer 18. For example, a data-rewritable flash memory can be used to store any set value to allow the value to be modified. Considering noise and a power supply terminal having a voltage with a noise level, active filter 10 is commonly switched at a frequency set at 15 kHz to 20 kHz.

Further, control signal φC is generated such that a zero cross detection signal φ**Z**C, which is generated by microcomputer 18 based on an input voltage Vac as shown in Fig. 5, serves as a trigger. Voltage Vac is a sinusoidal ac voltage having undergone full wave rectification. Microcomputer 18 samples input voltage Vac, and when input voltage Vac is equal to or smaller than a preset threshold voltage Vth, microcomputer 18 pulls zero cross detection signal φZC high (times t0, t2, t4), and when input voltage Vac is equal to or larger than threshold voltage Vth, microcomputer 18 pulls zero cross detection signal φZC low (times t1, t3, t5), and zero cross detection signal φZC is generated by using software.

Note that a circuit having a resistance element, a diode, and a photo coupler combined together, a comparator or similar hardware may be employed to generate and input zero cross detection signal φZC to microcomputer 18 to serve as a trigger for outputting control signal φC.

In the first embodiment, duty ratio DU of the current period is set to gradually decrease the deviation of duty ratio DUp of the previous period from target duty ratio DUt, thereby providing soft start. Further, a rate of change in duty ratio DU upon soft start can be flexibly set.

Moreover, threshold current Ith1 smaller than overcurrent level Ith2 at which IGBT 13 is destroyed is preset in microcomputer 18, and when input current Vin exceeds threshold current Ith1, duty ratio DU is instantly reduced. Accordingly, a large current flow that will destroy the elements in the circuit can be prevented, thereby ensuring safety.

Note that the term "instantly" refers, for example, to the next time a control constant is changed, e.g., after 50 µsec in the case of performing control with a carrier frequency of 20 kHz. Alternatively, instead of after 50 µsec, duty ratio DU can be reduced from the next zero cross point of a power supply voltage.

If sequence control is stopped at that time, product functionality is lowered. For this reason, threshold current Ith1 is set to a value that allows safe operation, and when a current larger than threshold current Ith1 is detected, duty ratio DU is reduced without stopping the sequence control to prevent destruction of the elements and circuit. As a result, safety can be ensured without lowering the product functionality. Note that the term "sequence control" refers to control for accomplishing the object as a product. For example, it refers to control for continuous cooling and heating in the case of an air conditioner, control for continuing to cool the inside of a refrigerator in the case of a refrigerator, and control for continuing to drive a motor for rotating a washing tub in the case of a washing machine.

In the first embodiment, if signal φI1 is high, duty ratio DU is instantly reduced to the predetermined sufficiently low duty ratio. Alternatively, a value obtained by multiplying duty ratio DUp stored in storage unit 36 that corresponds to the segment of the previous period by K (K is a real number larger than 0 and smaller than 1) may be employed as duty ratio DU for the current segment of the current period. Note that K may be a fixed value, or K may increase as the difference between input current Iin and threshold current Ith1 (Iin - Ith1) increases. Still alternatively, a value obtained by subtracting a fixed value from duty ratio DUp stored in storage unit 36 that corresponds to the segment of the previous period may be employed as duty ratio DU for the current segment of the current period.

If duty ratio DU is set to 0 (zero), input current Iin has a waveform similar to that of an input current in a capacitor input type power supply device. As a result, a maximum value of input current Iin may be larger than a detected value of the input current. Thus, duty ratio DU needs to be set to a value other than 0.

Duty ratio DU thus calculated is stored in storage unit 32 as duty ratio DUp of the previous period, and duty ratio DU output thereafter is gradually approximated to target duty ratio DUt from duty ratio DU after being reduced, and thus does not immediately return to duty ratio DU before being reduced.

There is an IGBT module that includes IGBT 13, and outputs an overcurrent detection signal when an overcurrent flows through IGBT 13. When such an IGBT module is used instead of IGBT 13, and the IGBT module outputs the overcurrent detection signal, microcomputer 18 determines that there is an abnormality, and stops the sequence control of inverter 16.

Frequent stopping of operation of a common product due to an abnormality, however, results in lowered product functionality. It is thus preferable to perform protection control without stopping the sequence control as much as possible. When an IGBT module is used, threshold current Ith1 smaller than threshold current Ith2 at which the IGBT module outputs the overcurrent detection signal is preset in microcomputer 18, When input current Iin exceeds threshold current Ith1, microcomputer 18 instantly reduces duty ratio DU without stopping the sequence control, and when the IGBT module outputs the overcurrent detection signal, microcomputer 18 stops the sequence control of inverter 16. In this case, therefore, ac current comparison unit 30 does not compare input current Iin to threshold current Ith2, and does not output signal φI2, either.

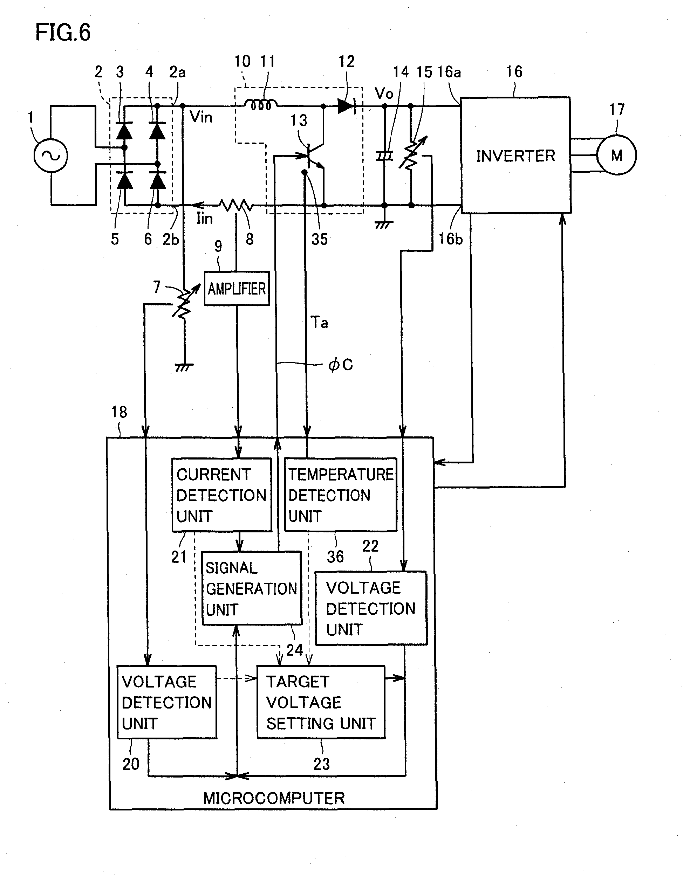

Fig. 6 is a circuit block diagram showing a modification of the first embodiment, which is compared to Fig. 1. A power supply device in Fig. 6 is different from the power supply device in Fig. 1 in that a temperature sensor 35 is provided in the vicinity of IGBT 13, and microcomputer 18 is provided with a temperature detection unit 36. Temperature sensor 35 detects a temperature Ta of IGBT 13, and outputs a signal having a level in accordance with the detected temperature. Temperature detection unit 36 generates a digital signal representing temperature Ta of IGBT 13 in response to the output signal from temperature sensor 35, and provides the signal to target voltage setting unit 23. Target voltage setting unit 23 decreases target voltage Vt as input voltage Vin decreases, decreases target voltage Vt as input current Iin increases, and decreases target voltage Vt as temperature Ta of IGBT 13 increases.

The temperature of IGBT 13 increases for larger values of input current Iin and larger currents passing through IGBT 13. Suppressing the temperature rise of IGBT 13, in combination with controlling target voltage Vt based on input current Iin, allows the power supply terminal to have a voltage with a reduced noise level, while reducing the risk that IGBT 13 may be destroyed due to high temperature, and thus providing increased safety. Furthermore, an inexpensive IGBT 13 can be adopted, which contributes to a reduced cost.

### [Second Embodiment]

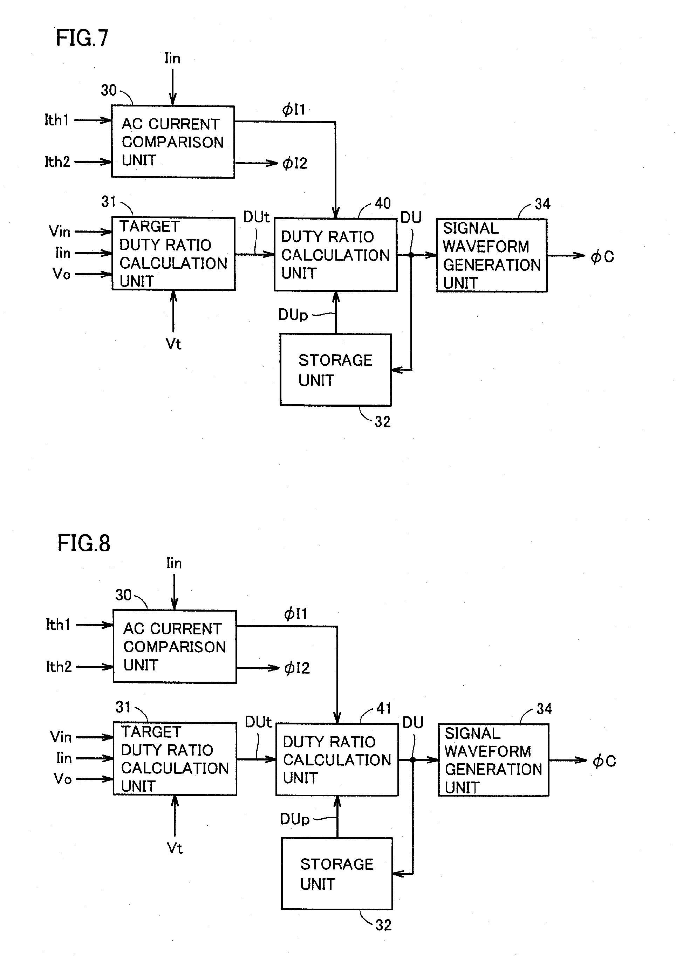

Fig. 7 is a block diagram showing a substantial part of a power supply device according to a second embodiment of the present invention, which is compared to Fig. 2. The power supply device in Fig. 7 is different from the power supply device in the first embodiment in that duty ratio calculation unit 33 is replaced by a duty ratio calculation unit 40. If signal φI1 is low, as with duty ratio calculation unit 33, duty ratio calculation unit 40 calculates duty ratio DU for a current segment of a current period to gradually eliminate in a predetermined number of periods a deviation of duty ratio DUp stored in storage unit 36 that corresponds to a segment of a previous period that corresponds to the current segment from target duty ratio DUt for the current segment.

If signal φI1 is high, target duty ratio DUt for the current segment of the current period is reduced, and so duty ratio calculation unit 40 instantly sets duty ratio DU for the current segment of the current period to target duty ratio DUt for the current segment of the current period. Accordingly, when input current Iin exceeds threshold current Ith1, duty ratio DU is reduced the next time a control constant is changed, e.g., after 50 µsec in the case of performing control with a carrier frequency of 20 kHz. Alternatively, instead of after 50 µsec, duty ratio DU can be reduced from the next zero cross point of a power supply voltage.

The same effect as that of the first embodiment is achieved in the second embodiment. Moreover, as compared to the first embodiment where duty ratio DU is forcibly reduced, output voltage Vo does not substantially deviate from a controlled value, and a safe ac current Iin can be quickly obtained as in the first embodiment.

### [Third Embodiment]

Fig. 8 is a block diagram showing a substantial part of a power supply device according to a third embodiment of the present invention, which is compared to Fig. 2. The power supply device in Fig. 8 is different from the power supply device in the first embodiment in that duty ratio calculation unit 33 is replaced by a duty ratio calculation unit 41. Duty ratio calculation unit 41 calculates duty ratio DU for a current segment of a current period to gradually eliminate a deviation of duty ratio DUp stored in storage unit 36 that corresponds to a segment of a previous period that corresponds to the current segment from target duty ratio DUt for the current segment. Duty ratio calculation unit 41 has a gain GU when increasing duty ratio DU toward target duty ratio DUt, and gains GD1, GD2 when reducing duty ratio DU toward target duty ratio DUt (wherein GD1 < GD2).

If signal φI1 is low, duty ratio calculation unit 41 calculates duty ratio DU for the current segment of the current period by using gains GU and GD1 to gradually eliminate the deviation of duty ratio DUp that corresponds to the segment of the previous period from target duty ratio DUt for the current segment. If signal φI1 is high, duty ratio calculation unit 41 calculates duty ratio DU for the current segment of the current period by using gain GU (or gain GD2) to gradually (or swiftly) eliminate the deviation of duty ratio DUp that corresponds to the segment of the previous period from target duty ratio DUt for the current segment.

Accordingly, when input current Iin exceeds threshold current Ith1, duty ratio DU is reduced the next time a control constant is changed, e.g., after 50 µsec in the case of performing control with a carrier frequency of 20 kHz. Alternatively, instead of after 50 µsec, duty ratio DU can be reduced from the next zero cross point of a power supply voltage.

Put another way, when target duty ratio DUt is higher than duty ratio DUp of the previous period, duty ratio calculation unit 41 increases duty ratio DU of the current period at a first rate to gradually decrease the deviation of duty ratio DUp of the previous period from target duty ratio DUt. When target duty ratio DUt is lower than duty ratio DUp of the previous period, duty ratio calculation unit 41 reduces duty ratio DU of the current period at a second rate to gradually decrease the deviation of duty ratio DUp of the previous period from target duty ratio DUt. When input current Iin exceeds threshold current Ith1, duty ratio calculation unit 41 instantly increases the second rate.

In the third embodiment, steep variation in output such as when target duty ratio DUt is directly substituted into duty ratio DU does not occur, and thus a dangerous state continues only for a short period of time, thereby providing control in a more continuous manner.

While proportional control of duty ratio DU was described in the second embodiment, this is not restrictive. Any method can be employed for instantly increasing the second rate when input current Iin exceeds threshold current Ith1. For example, an integral control method can be employed for increasing a control rate by keeping a gain G constant and decreasing integral sensitivity for performing an addition of gain G.

### [Fourth Embodiment]

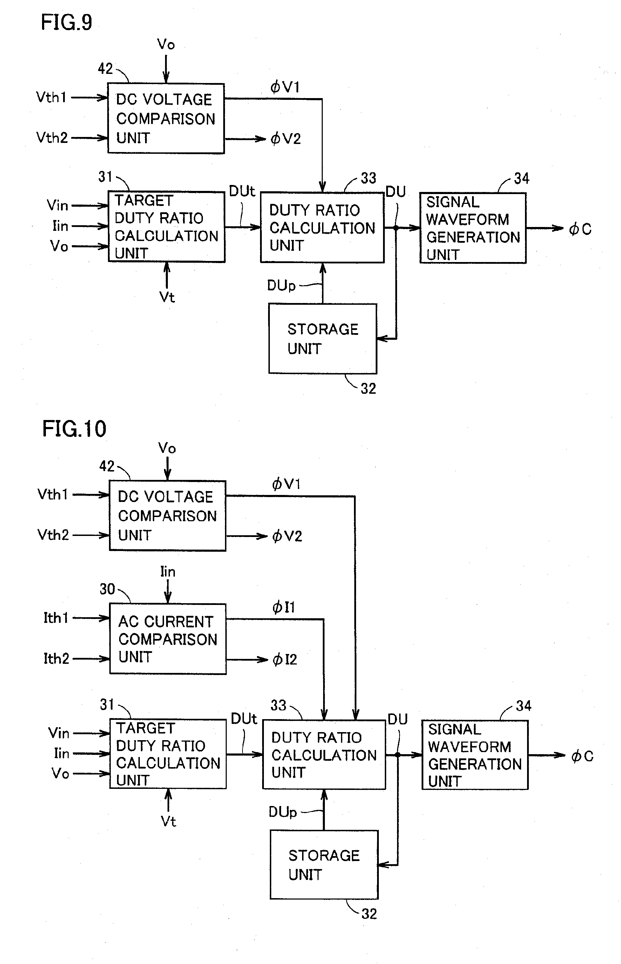

Fig. 9 is a block diagram showing a substantial part of a power supply device according to a fourth embodiment of the present invention, which is compared to Fig. 2. The power supply device in Fig. 9 is different from the power supply device in the first embodiment in that ac current comparison unit 30 is replaced by a dc voltage comparison unit 42.

Dc voltage comparison unit 42 determines output voltage Vo in response to an output signal from voltage detection unit 22 in Fig. 1, and compares output voltage Vo to preset threshold voltages Vth1 and Vth2 (wherein Vth1 < Vth2). If Vin < Vth1 is satisfied, dc voltage comparison unit 42 pulls both signals φV1 and φV2 low. If Vth1 < Vo < Vth2 is satisfied, dc voltage comparison unit 42 pulls signals φV and φV2 high and low, respectively. If Vo > Vth2 is satisfied, dc voltage comparison unit 42 pulls both signals φV1 and φV2 high.

If signal φV2 is low, microcomputer 18 controls inverter 16, and if signal φV2 is pulled high, microcomputer 18 turns off all transistors in inverter 16 and stops controlling inverter 16.

If signal φV1 is high, duty ratio calculation unit 33 instantly reduces duty ratio DU for a current segment of a current period to a predetermined sufficiently low duty ratio. That is, if signal φV1 is high, duty ratio calculation unit 33 calculates duty ratio DU such that duty ratio DU gradually reaches target duty ratio DUt, and thus if a large output voltage Vo is detected for some reason, a dangerous state may continue.

In general, in order to prevent destruction of circuit elements due to an overcurrent, a threshold voltage is set, and once a detected voltage exceeds the threshold voltage, operation of the circuit is stopped. In active filter control, switching operation is performed to store energy in reactor 11 across a power supply clock, and thus output voltage Vo easily increases under some influence such as erroneous detection of control timing. However, stopping of operation of a product due to an abnormality whenever a detected voltage exceeds a threshold voltage results in lowered product functionality. It is thus preferable to perform protection control to terminate a dangerous state without stopping the sequence control as much as possible.

For this reason, in the fourth embodiment, threshold voltage Vth1 lower than threshold voltage Vth2 at which the sequence control is stopped is preset, and when output voltage Vo exceeds threshold voltage Vth1, duty ratio DU is instantly reduced. Note that, since frequent control of reducing duty ratio DU results in inability to obtain a desired output voltage, threshold voltage Vth1 needs to be set to a high value.

The same effect as that of the first embodiment is achieved in the fourth embodiment.

Ac current comparison unit 30 in Fig. 7 may be replaced by dc voltage comparison unit 42. In this case, if signal φV1 is low, duty ratio calculation unit 40 calculates duty ratio DU to gradually eliminate a deviation of duty ratio DUp of a previous period from target duty ratio DUt, and if signal φV1 is high, duty ratio calculation unit 40 instantly sets duty ratio DU to target duty ratio DUt. If signal φV2 is low, microcomputer 18 controls inverter 16, and if signal φV2 is pulled high, microcomputer 18 stops controlling inverter 16.

Ac current comparison unit 30 in Fig. 8 may be replaced by dc voltage comparison unit 42. In this case, if signal φV1 is low, duty ratio calculation unit 41 calculates duty ratio DU by using gains GU and GD1 to gradually eliminate a deviation of duty ratio DUp of a previous period from target duty ratio DUt. If signal φV1 is high, duty ratio calculation unit 41 calculates duty ratio DU by using gain GU (or gain GD2) to gradually (or swiftly) eliminate a deviation of duty ratio DUp of a previous period from target duty ratio DUt. If signal φV2 is low, microcomputer 18 controls inverter 16, and if signal φV2 is pulled high, microcomputer 18 stops controlling inverter 16.

### [Fifth Embodiment]

Fig. 10 is a block diagram showing a substantial part of a power supply device according to a fifth embodiment of the present invention, which is compared to Fig. 2. The power supply device in Fig. 10 is different from the power supply device in the first embodiment in that dc voltage comparison unit 42 is added. If both signals φI1 and φV1 are low, duty ratio calculation unit 33 calculates duty ratio DU for a current segment of a current period to gradually eliminate in a predetermined number of periods a deviation of a duty ratio DUp stored in storage unit 36 that corresponds to a segment of a previous period that corresponds to the current segment from target duty ratio DUt for the current segment.

If signal φI1 or signal φV1 is pulled high, duty ratio calculation unit 33 instantly reduces duty ratio DU for the current segment of the current period to a predetermined sufficiently low duty ratio. If both signals φI2 and φV2 are low, microcomputer 18 controls inverter 16, and if signal φI2 or signal φV2 is pulled high, microcomputer 18 turns off all transistors in inverter 16 and stops controlling inverter 16.

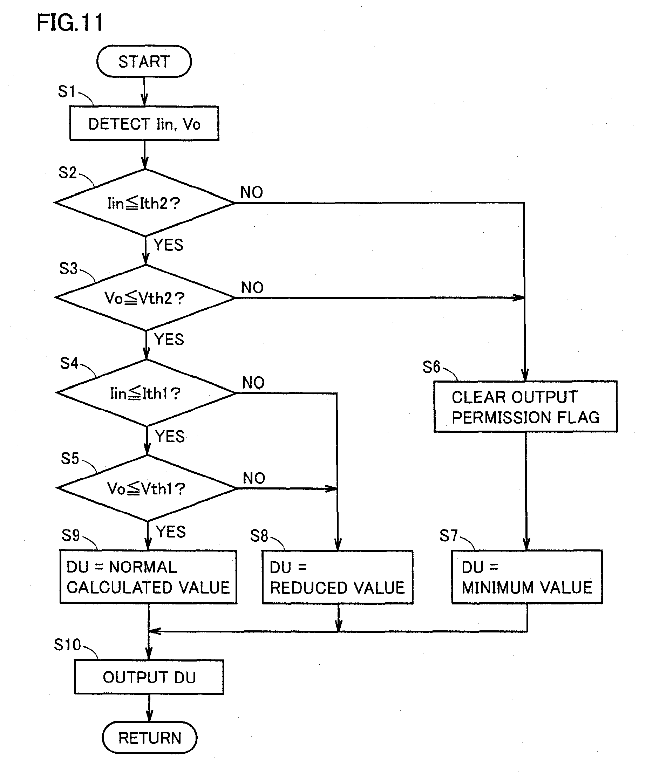

Fig. 11 is a flowchart showing operation of microcomputer 18 in the fifth embodiment. This flowchart only shows operation of setting duty ratio DU for each carrier period, and control of switching between controlling IGBT 13 to turn it on/off and stopping control of IGBT 13 is separately performed.

In step S1, microcomputer 18 detects input current Iin and output voltage Vo, and in step S2, microcomputer 18 determines whether or not input current Iin is equal to or smaller than threshold current Ith2. If Iin ≤ Ith2 is satisfied, in step S3, microcomputer 18 determines whether or not output voltage Vo is equal to or smaller than threshold voltage Vth2. If Vo ≤ Vth2 is satisfied, in step S4, microcomputer 18 determines whether or not input current Iin is equal to or smaller than threshold current Ith1. If Iin ≤ Ith1 is satisfied, in step S5, microcomputer 18 determines whether or not output voltage Vo is equal to or smaller than threshold voltage Vth1.

If input current Iin is larger than threshold current Ith2 in step S2 (Iin > Ith2), and if output voltage Vo is larger than threshold voltage Vth2 in step S3 (Vo > Vth2), in step S6, microcomputer 18 clears a flag that permits output of control signal φC to stop output of control signal φC, to stop controlling inverter 16. In step S7, microcomputer 18 sets duty ratio DU to a minimum value, and proceeds to step S10.

If input current Iin is larger than threshold current Ith1 in step S4 (Ith1 ≥ Iin > Ith2), and if output voltage Vo is larger than threshold voltage Vth1 in step S5 (Vth2 ≥ Vo > Vth1), in step S8, microcomputer 18 sets duty ratio DU to a predetermined reduced value, and proceeds to step S10.

If output voltage Vo is equal to or smaller than threshold voltage Vth1 in step S5 (Vo ≤ Vth1, Iin ≤ Ith1), in step S9, microcomputer 18 sets duty ratio DU to a normal calculated value, and proceeds to step S10. In step S10, microcomputer 18 outputs duty ratio DU set in step S7, S8 or S9, and returns to step S1.

The output permission flag in step S6 is used in a state control function (not described), and when cleared, the sequence control is stopped. In step S7, while duty ratio DU does not need to be set as the output permission flag has already been cleared, duty ratio DU is set to the minimum value in case the sequence control is not immediately stopped depending on the timing and the time. The minimum value of duty ratio DU is a fixed value set in microcomputer 18, and is set for a short output time that does not affect the capability to increase a dc voltage and formation of an ac current waveform. When duty ratio DU has the minimum value, output of control signal φC is substantially stopped. Thus, even if output of control signal φC is not immediately stopped, a current value or a voltage value is reduced as compared to those at a point in time when an overcurrent or overvoltage is detected, thereby ensuring security.

The same effect as that of the first embodiment is achieved in the fifth embodiment.

Dc voltage comparison unit 42 may be added to the power supply device in Fig. 7. In this case, if both signals φI1 and φV1 are low, duty ratio calculation unit 40 calculates duty ratio DU to gradually eliminate a deviation of duty ratio DUp of a previous period from target duty ratio DUt. If signal φI1 or signal φV1 is high, duty ratio calculation unit 40 instantly sets duty ratio DU to target duty ratio DUt. If both signals φI2 and φV2 are low, microcomputer 18 controls inverter 16, and if signal φI2 or signal φV2 is pulled high, microcomputer 18 stops controlling inverter 16.

Dc voltage comparison unit 42 may be added to the power supply device in Fig. 8. In this case, if both signals φI1 and φV1 are low, duty ratio calculation unit 41 calculates duty ratio DU by using gains GU and GD1 to gradually eliminate a deviation of duty ratio DUp of a previous period from target duty ratio DUt. If signal φI1 or signal φV1 is high, duty ratio calculation unit 41 calculates duty ratio DU by using gain GU (or gain GD2) to gradually (or swiftly) eliminate a deviation of duty ratio DUp of a previous period from target duty ratio DUt. If both signals φI2 and φV2 are low, microcomputer 18 controls inverter 16, and if signal φI2 or signal φV2 is pulled high, microcomputer 18 stops controlling inverter 16.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

1 ac power supply; 2 rectifier circuit; 2a positive voltage output node; 2b negative voltage output node; 3 to 6 diode; 7, 15 voltage division resistor; 8 current detection resistor; 9 amplifier; 10 active filter; 11 reactor; 12 diode; 13 IGBT; 14 smoothing capacitor; 16 inverter; 16a positive voltage input node; 16b negative voltage output node; 17 ac motor; 18 microcomputer; 20, 22 voltage detection unit; 21 current detection unit; 23 target voltage setting unit; 24 signal generation unit; 30 ac current comparison unit; 31 target duty ratio calculation unit; 32 storage unit; 33, 40, 41 duty ratio calculation unit; 34 signal waveform generation unit; 35 temperature sensor; 36 temperature detection unit; 42 dc voltage comparison unit.

## Claims

1. A power supply device comprising:
a rectifier circuit (2) for rectifying a first ac voltage;
an active filter (10) provided in a next stage of said rectifier circuit (2);
a smoothing circuit (14) for smoothing an output voltage from said active filter (10) to generate a dc voltage; and
an inverter (16) for converting said dc voltage to a second ac voltage;
said active filter (10) including
a reactor (11) having one terminal receiving an output voltage from said rectifier circuit (2),
a diode (12) having an anode connected to the other terminal of said reactor (11) and a cathode connected to said smoothing circuit (14), and
a switching element (13) connected between the other terminal of said reactor (11) and a reference voltage line,
a microcomputer (18) for detecting an input current (Iin), an input voltage (Vin), and an output voltage (Vo) to and from said active filter (10), and based on a detection result, controlling said switching element (13) to turn it on/off to match said input current (Iin) to said input voltage (Vo) in phase, and also match the output voltage (Vo) from said active filter (10) to a target voltage (Vt),
said microcomputer (18) including
a target duty ratio calculation unit (31) for calculating a target duty ratio (DUt) based on said input voltage (Vin), said input current (Iin), said output voltage (Vo), and said target voltage (Vt),
a duty ratio calculation unit (33) for calculating a duty ratio (DU) of a current period to gradually decrease a deviation of a duty ratio (DUp) of a previous period from the target duty ratio (DUt) calculated by said target duty ratio calculation unit (31), and when said output voltage (Vo) exceeds a predetermined first threshold voltage (Vth1), instantly reducing the duty ratio (DU) of the current period, and
a signal generation unit (34) for generating a signal controlling said switching element (13) based on the duty ratio (DU) of the current period calculated by said duty ratio calculation unit (33).

2. The power supply device according to claim 1, wherein
when said output voltage (Vo) exceeds said first threshold voltage (Vth1), said duty ratio calculation unit (33) instantly reduces the duty ratio (DU) of the current period to a predetermined duty ratio.

3. The power supply device according to claim 1, wherein
when said output voltage (Vo) exceeds said first threshold voltage (Vth1), said duty ratio calculation unit (40) instantly reduces the duty ratio (DU) of the current period to said target duty ratio (DUt).

4. The power supply device according to claim 1, wherein
said microcomputer (18) controls said inverter (16), and when said output voltage (Vo) exceeds a predetermined second threshold voltage (Vth2) larger than said first threshold voltage (Vth1), said microcomputer (18) stops said inverter (16).

5. A power supply device comprising:
a rectifier circuit (2) for rectifying a first ac voltage;
an active filter (10) provided in a next stage of said rectifier circuit (2);
a smoothing circuit (14) for smoothing an output voltage from said active filter (10) to generate a dc voltage; and
an inverter (16) for converting said dc voltage to a second ac voltage;
said active filter (10) including
a reactor (11) having one terminal receiving an output voltage from said rectifier circuit (2),
a diode (12) having an anode connected to the other terminal of said reactor (11) and a cathode connected to said smoothing circuit (14), and
a switching element (13) connected between the other terminal of said reactor (11) and a reference voltage line,
a microcomputer (18) for detecting an input current (Iin), an input voltage (Vin), and an output voltage (Vo) to and from said active filter (10), and based on a detection result, controlling said switching element (13) to turn it on/off to match said input current (Iin) to said input voltage (Vo) in phase, and also match the output voltage (Vo) from said active filter (10) to a target voltage (Vt),
said microcomputer (18) including
a target duty ratio calculation unit (31) for calculating a target duty ratio (DUt) based on said input voltage (Vin), said input current (Iin), said output voltage (Vo), and said target voltage (Vt),
a duty ratio calculation unit (41) for, when the target duty ratio (DUt) calculated by said target duty ratio calculation unit (31) is higher than a duty ratio (DUp) of a previous period, increasing a duty ratio (DU) of a current period at a first rate to gradually decrease a deviation of the duty ratio (DUp) of the previous period from the target duty ratio (DUt), and when the target duty ratio (DUt) calculated by said target duty ratio calculation unit (31) is lower than the duty ratio (DUp) of the previous period, reducing the duty ratio (DU) of the current period at a second rate to gradually decrease a deviation of the duty ratio (DUp) of the previous period from the target duty ratio (DUt), and when said output voltage (Vo) exceeds a predetermined first threshold voltage (Vth1), instantly increasing said second rate, and
a signal generation unit (34) for generating a signal controlling said switching element (13) based on the duty ratio (DU) of the current period calculated by said duty ratio calculation unit (41).

6. The power supply device according to claim 5, wherein
said microcomputer (18) controls said inverter (16), and when said output voltage (Vo) exceeds a predetermined second threshold voltage (Vth2) larger than said first threshold voltage (Vth1), said microcomputer (18) stops said inverter (16).
